Europäisches Patentamt

European Patent Office

Office européen des brevets

(11) Veröffentlichungsnummer: **0 299 173**

**A2**

## (12) EUROPÄISCHE PATENTANMELDUNG

(21) Anmeldenummer: **88108240.8**

(22) Anmeldetag: **24.05.88**

(51) Int. Cl.⁴ **B62D 5/12**

(30) Priorität: **17.07.87 DE 3723705**

(43) Veröffentlichungstag der Anmeldung:
**18.01.89 Patentblatt 89/03**

(84) Benannte Vertragsstaaten:
**DE ES FR GB IT SE**

(71) Anmelder: **Dr.Ing.h.c. F. Porsche
Aktiengesellschaft
Porschestrasse 42
D-7000 Stuttgart 40(DE)**

(72) Erfinder: **Küsters, Heinz-Peter, Dipl.-Ing. FH
Laerchenweg 55
D-7143 Vaihingen/Enz(DE)**
Erfinder: **Mayer, Hartmut
Höhenweg 4
D-7257 Ditzingen(DE)**
Erfinder: **Mahncke, Jürgen, Dipl.-Ing. FH
Vogelsangweg 10
D-7533 Lehningen-Tiefenbronn(DE)**

(54) **Lenkachse.**

(57) Die Lenkachse für einen Gabelstapler weist einen doppelt wirkenden Lenkzylinder auf, dessen Zylinderrohr endseitig jeweils über einen Deckel abgeschlossen ist. Der Lenkzylinder umfaßt ein innerhalb einer zylindrischen Aufnahme eines Teils des Deckels gehaltenes Zylinderrohr. Dies bildet im Bereich der Aufnahme einen zusätzlichen Hubraum, der endseitig des Rohres von einem Lagerflansch des Deckels begrenzt wird, welcher durch gegenüberliegende Schraubbolzen starr mit einem Traggestell verbunden ist, das aufbauseitig gehalten wird.

FIG.1

EP 0 299 173 A2

## Lenkachse

Die Erfindung bezieht sich auf eine Lenkachse nach dem Oberbegriff des Anspruchs 1.

Aus der US-PS 4 046 218 ist eine Lenkachse für einen Gabelstapler mit einem Lenkzylinder bekannt geworden, der über Bolzen in einem Traggestell gehalten ist. Über diese Bolzen ist der Lenkzylinder verstellbar gelagert, derart, daß im Betrieb eine vertikale Bewegungsmöglichkeit des Lenkzylinders möglich wird. Die Bolzen sind insbesondere als Gleitbolzen ausgeführt und in einer Bohrung verschiebbar angeordnet. Eine Sicherung gegen ein Herausgleiten erfolgt über eine Abschlußplatte. Das Zylinderrohr des Lenkzylinders its endseitig auf einem zylindrischen Absatz des Abschlußdeckels gehalten, wobei im Abstützbereich der Ansatz in das Rohr hineinragt und hierdurch in nachteiliger Weise den Hubraum verkleinert.

Die Aufgabe der Erfindung ist es, eine Lenkachse für einen Gablestapler zu schaffen, die mit relative großem Toleranzausgleich einfach im Tragestell zu montieren ist und mit einem relative kurven Zylinderrohr einen relativ langen Hubweg ergibt.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß der Lenkzylinder in einfacher Weise in ein Achsgestell montierbar ist, wobei eine zusätzliche Schraubenverbindung zwischen dem Zylinderrohr und den Abschlußdeckeln entfällt. Durch ein Längsspiel zwischen dem Rohr und den Deckeln lassen sich diese zum Achsgestell exakt einpassen, wozu insbesondere die Buchsen beitragen, welche die Bolzen im Deckel zu den Bohrungen im Gestell achsgenau ausrichten.

Durch Schraubbolzen wird der Deckel gegen das Achsgestell verspannt und reibschlüssig festgesetzt, so daß kein Verdrehen der Deckel auf den Buchsen durch Querkräfte mehr möglich ist, was ansonsten eine Verdrehung der Zylinderstangen auf dem Führungsband zur Folge hätte.

Zur Vereinfachung der Montage des Zylinders am Gestell ist zwischen einem Befestigungsabschnitt des Deckels und einem Träger des Gestells ein Spiel vorgesehen, das über eine Buchse bestimmbar ist, so daß eine grobe preisgünstige Bearbeitung der Deckel, des Zylinderrohres und des Gestells möglich wird.

Die Anordnung des Führungsbandes und der Schraubbolzen in einer gemeinsamen senkrechten Ebene hat den Vorteil, daß bei der Aufnahme von Querkräften keine Momente entstehen können und somit eine zusätzliche Belastung der Bauteile weitgehendst entfällt.

Das Zylinderrohr der Lenkachse ist so in einer zylindrischen Aufnahme des Deckels angeordnet, daß sich im Bereich der Aufnahme ein zusätzlicher Hubraum ergibt und hierdurch eine optimale Ausnutzung der gesamten Rohrlänge hinsichtlich seines umschlossenen Raumes ergibt.

Ein Ausführungsbeispiel der Erfindung ist in der Zeichnung dargestellt und wird im folgenden näher beschrieben.

Es zeigen

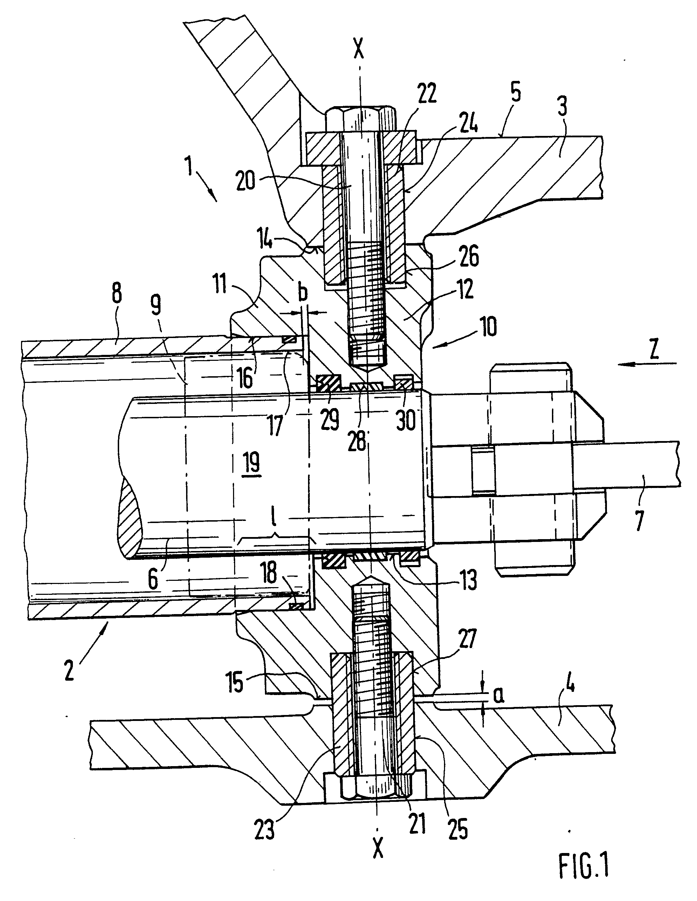

Fig. 1 eine Rückansicht der Lenkachse, und

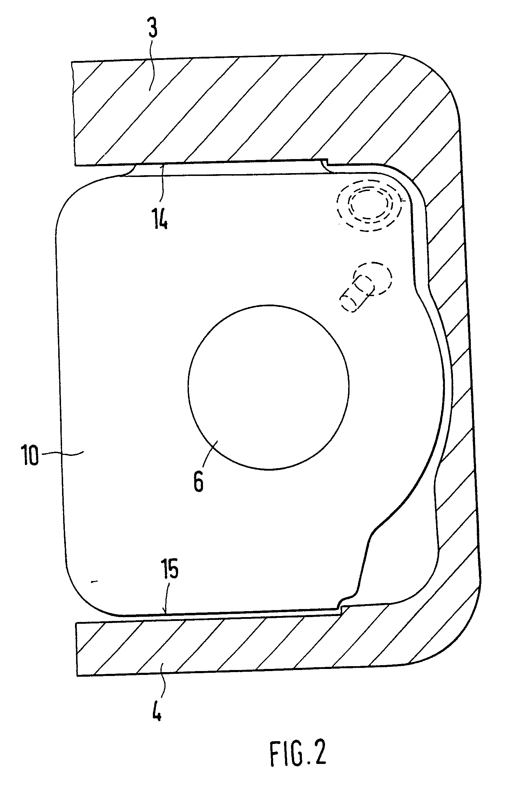

Fig. 2 eine Seitenansicht der Lenkachse in Pfeilrichtung Z gesehen.

Die Lenkachse 1 umfasst im wesentlichen einen Lenkzylinder 2, der zwischen Trägern 3 und 4 eines Gestells 5 gelagert und befestigt ist. Dieses Gestell ist aufbauseitig abgestützt und geringfügig in Fahrzeuglängsrichtung verschwenkbar gehalten. Mit den Trägern 3 und 4 ist ein Radträger (nicht gezeigt) verbunden, der über eine Spurstnge 7 an einer Kolbenstange 6 des Lenkzylinders 2 angelenkt ist.

Der Lenkzylinder 2 umfasst ein Zylinderrohr 8, das endseitig jeweils über einen Deckel 10 abgeschlossen ist. Dieser Deckel 10 umfasst im wesentlichen ein Aufnahmeteil 11 und einen anschließenden Lagerflansch 12. Dieser weist eine innere Lagerfläche 13 für die Kolbenstange 6 und äußere Abstützflächen 14 und 15 auf, die den korrespondierenden Trägern 3 und 4 des Gestells 5 zugerichtet sind.

Das Aufnahmeteil 11 des Deckels 10 weist eine zylindrische Ausnehmung 16 auf, in der das freie Ende 17 des Zylinderrohres 8 unter Zwischenschaltung eines Dichtringes 18 mit Schiebesitz angeordnet ist. Endseitig des Rohres 8 ist es vom Lagerflansch 12 abgeschlossen, wobei sich innerhalb der Ausnehmung 16 im Deckel 10 ein zusätzlicher Hubraum 19 mit der Länge 1 bildet.

Der Deckel 10 ist über Schraubbolzen 20, 21, die in Buchsen 22, 23 angeordnet sind, an den Trägern 3, 4 des Gestells 5 festsetzbar. Die Buchsen 22 und 23 sind als Paßbuchsen ausgeführt und erstrecken sich von einer Bohrung 24, 25 im Träger 4, 5 bis in eine korrespondierende Bohrung 26, 27 im Lagerflansch 12.

Der Deckel 10 ist über den einen Schraubbolzen 20 mit seiner einen äußeren Abstützfläche 14 derart gegen den oberen Träger 3 gespannt, daß ein Reibschluß hergestellt wird und eine Verlagerung des Lenkzylinders 3 gegenüber dem Gestell 5 ausgeschlossen ist.

Die weitere äußere Abstützfläche 15 ist mit einem Spiel a zum unteren Träger 4 angeordnet.

Zur Erhaltung dieses Spiels a und um einen Verzug des Gestells 5 beim Festschrauben des Lenkzylinders 2 über die Schraube 21 zu vermeiden, weist die Buchse 23 eine das Maß a bestimmende Länge auf. Sie stützt sich zwischen dem Grund der Bohrung 27 und dem Kopf der Schraube 21 ab.

Zur toleranzausgleichenden Befestigung des Lenkzylinders 2 am Gestell 5 zwischen den Trägern 3 und 4 ist das Zylinderrohr 8 mit einem Spiel b in den Aufnahmen 16 gehalten, damit ein gewisser Längenausgleich, aufgrund von groben Bearbeitungstoleranzen, erzielbar wird.

Im Lagerflansch 12 ist zur axial verschiebbaren Aufnahme der Kolbenstange 6 ein Führungsband 28 in der inneren Lagerfläche 13 des Deckels 10 eingelassen. Dieses Band 28 ist in einer gemeinsamen senkrechten Ebene X-X mit den Schraubbolzen 20 und 21 vorgesehen. Neben dem Führungsband 28 - dem Hubraum 19 zugerichtet - ist ein Dichtring 29 und an der außenliegenden Seite des Lagerflansches 12 ist ein Abstreifring 30 vorgesehen.

Durch die Verbindung des Deckels 10 über die Schraube 20 aufgrund des Reibschlußes ist kein Verdrehen des Deckels 10 auf den Buchsen 22 und 23 möglich. Ein Verdrehen könnte durch eine Querkraft der Sprustange 7 auf die Kolbenstange 6 hervorgerufen werden. Die geringe Reibung auf dem Führungsband 28 würde ein Drehmoment ermöglichen, da aber der Reibschluß größer ist, kann keine Verdrehung des Lenkzylinders 2 mehr erfolgen.

## Ansprüche

1. Lenkachse für ein Fahrzeug, insbesondere für einen Gabelstapler mit einem doppelt wirkenden Lenkzylinder, dessen Zylinderrohr über Deckel abgeschlossen und in einem am Fahrzeugaufbau abgestützten Traggestell gehalten ist, dadurch gekennzeichnet, daß der Lenkzylinder (2) ein innerhalb einer zylindrischen Aufnahme (16) eines Teils (11) des Deckels (10) gehaltenes Zylinderrohr (8) umfast, das mit seinem freien Ende (17) im Bereich (1) der Aufnahme (16) einen zusätzlichen Hubraum (19) bildet, der endseitig des Rohres (8) von einem Lagerflansch (12) des Deckels (10) begrenzt ist, welcher durch gegenüberliegende Schraubbolzen (20, 21) starr mit dem Traggestell (5) verbunden ist.

2. Lenkachse nach Anspruch 1, dadurch gekennzeichnet, daß das Zylinderrohr (8) unter Zwischenschaltung eines Dichtringes (18) mit Schiebesitz in der zylindrischen Aufnahme (16) angeordnet und zwischen den mit dem Gestell (5) verbundenen Deckeln (10) ein Spiel (b) aufweist und über diese Deckel (10) festsetzbar ist.

3. Lenkachse nach den Ansprüchen 1 oder 2, dadurch gekennzeichnet, daß der Deckel (10) mit seiner einen äußeren Abstützfläche (14) reibschlüssig an einem oberen Träger (3) des Gestells (5) anliegt und mit seiner anderen äußeren Abstützfläche (15) zu einem unteren Träger (4) mit einem Spiel (a) angeordnet ist.

4. Lenkachse naoh einem oder mehreren der vorhergehenden Ansprüche, dadurch gekennzeichnet, daß der Deckel (10) in einer inneren Lagerfläche (13) des Lagerflansches (12) ein die Kolbenstange (6) aufnehmendes ringförmiges Führungsband (28) aufweist, das in einer gemeinsamen senkrechten Ebene (X-X) mit den Schraubbolzen (20 und 21) angeordnet ist.

5. Lenkachse nach einem oder mehreren der vorhergehenden Ansprüche, dadurch gekennzeichnet, daß die Schraubbolzen (20, 21) in zylindrischen Buchsen (22, 23) geführt sind und diese sich mit Paßsitz in einer Bohrung (24, 25) vom Träger (3, 4) bis in eine Bohrung (26, 27) des Lagerflansches (12) erstrecken, wobei die im unteren Träger (4) des Gestells (5) eingesetzte eine Buchse (23) eine das Spiel (a) zwischen dem Deckel (10) und dem unteren Träger (4) bestimmende Länge aufweist und sich endseitig über den Kopf des Schraubenbolzens (21) am Grund der Bohrung (27) des Deckels (10) abstüzt.

6. Lenkachse nach einem oder mehreren der vorhergehenden Ansprüche, dadurch gekennzeichnet, daß der Reibschluß zwischen dem oberen Träger (3) und der äußeren Abstützfläche (14) des Deckels (10) größer ist als die Reibung zwischen dem Führungsband (28) und der Kolbenstange (6)

7. Lenkachse nach einem oder mehreren der vorhergehenden Ansprüche, dadurch gekennzeichnet, daß zu beiden Seiten benachbart des Führungsbandes (28) jeweils ein Dichtring (29) und ein Abstreifring (30) angeordnet sind, wobei der Dichtring (29) in dem dem Zylinderraum zugerichteten Abschnitt des Lagerflansches (12) angeordnet ist.

FIG.1

FIG.2